# EUROPÄISCHE PATENTANMELDUNG

(11) **EP 2 177 637 A1**
(43) Veröffentlichungstag der Anmeldung: **21.04.2010**
(21) Anmeldenummer: 10000552.9
(22) Anmeldetag: 06.10.2006
(51) Int. Cl.: C22C 19/03, C22C 19/05, C23C 30/00

(54) **Bauteil mit Schutzschicht gegen Korrosion und Oxidation bei hohen Temperaturen**

(30) Priorität: 25.10.2005 EP 05023321
(62) Teilanmeldung aus: 06807025.9
(71) Anmelder: SIEMENS AKTIENGESELLSCHAFT, 80333 München (DE)
(72) Erfinder: Stamm, Werner Dr., 45481 Mülheim an der Ruhr (DE)

(57) **Zusammenfassung**

Bekannte Schutzschichten mit hohem Al-und/oder Cr-Gehalt und zusätzlich verstärkt durch Re bilden Sprödphasen aus, die unter dem Einfluss von Kohlenstoff während des Einsatzes zusätzlich verspröden.

Die erfindungsgemäße Schutzschicht hat die Zusammensetzung 1,5% bis 2,5% Rhenium, 11% bis 13% Kobalt, 20% bis 22% Chrom, 10,5% bis 11,5% Aluminium, 0,3% bis 0,5% Yttrium und/oder zumindest ein äquivalentes Metall aus der Gruppe umfassend Scandium und die Elemente der Seltenen Erden sowie Rest Nickel und zeigt kaum eine Versprödung durch Cr/Re Ausscheidungen.

## Beschreibung

Die Erfindung betrifft ein Bauteil gemäß Anspruch 1.

Die Erfindung bezieht sich insbesondere auf eine Schutzschicht für ein Bauteil, das aus einer Superlegierung auf Nickel- oder Kobaltbasis besteht.

Schutzschichten für metallische Bauteile, die deren Korrosionsbeständigkeit und/oder Oxidationsbeständigkeit erhöhen sollen, sind im Stand der Technik in großer Zahl bekannt. Die meisten dieser Schutzschichten sind unter dem Sammelnamen MCrAlY bekannt, wobei M für mindestens eines der Elemente aus der Gruppe umfassend Eisen, Kobalt und/oder Nickel steht und weitere wesentliche Bestandteile Chrom, Aluminium und Yttrium sind.

Aus der EP 0 194 392 B1 sind weiterhin zahlreiche spezielle Zusammensetzungen für Schutzschichten des obigen Typs mit Beimischungen weiterer Elemente für verschiedene Anwendungszwecke bekannt. Dabei ist auch das Element Rhenium mit Beimischungen bis 10% Gewichtsanteil neben vielen anderen wahlweise beifügbaren Elementen erwähnt. Wegen wenig spezifizierter weiter Bereiche für mögliche Beimischungen ist jedoch keine der angegebenen Schutzschichten für besondere Bedingungen qualifiziert, wie sie beispielsweise an Laufschaufeln und Leitschaufeln von Gasturbinen mit hohen Eintrittstemperaturen, die über längere Zeiträume betrieben werden müssen, auftreten.

Schutzschichten, die Rhenium enthalten, sind auch aus dem US-Patent 5,154,885 und der EP 0 652 299 B1 bekannt. Ebenso offenbart die EP 1 306 454 B1 eine Schutzschicht bestehend aus Nickel, Kobalt, Chrom, Aluminium, Rhenium und Yttrium. Angaben über die Anteile von Nickel und Kobalt sind nicht vorhanden.

Die US 6,346,134 B1 offenbart eine MCrAlY-Schicht, mit einem Chromgehalt von 20wt% bis 35wt%, einem Aluminiumgehalt von 5wt% bis 15wt%, Zugaben von Hafnium, Rhenium, Lanthan oder Tantal sowie einem hohen Yttriumgehalt von 4wt% bis 6wt%.

Die US 6,280,857 B1 offenbart eine Schutzschicht, die die Elemente Kobalt, Chrom und Aluminium auf Nickelbasis, die optionale Zugabe von Rhenium sowie zwingende Beimengungen von Yttrium und Silizium offenbart.

Die Bemühung um die Steigerung der Eintrittstemperaturen sowohl bei stationären Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000°C möglich. Inzwischen erlaubt der Stand der Technik Eintrittstemperaturen von 950°C und mehr bei stationären Gasturbinen sowie 1100°C und mehr in Gasturbinen von Flugtriebwerken.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muss zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000°C zu erwarten sind, muss eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muss die Schutzschicht hinreichend duktil sein, um eventuellen Verformungen des Grundwerkstoffes folgen zu können und nicht zu reißen, da auf diese Weise Angriffspunkte für Oxidation und Korrosion geschaffen würden. Hierbei kommt typischerweise das Problem auf, dass eine Erhöhung der Anteile von Elementen wie Aluminium und Chrom, die die Beständigkeit einer Schutzschicht gegen Oxidation und Korrosion verbessern können, zu einer Verschlechterung der Duktilität der Schutzschicht führt, so dass mit einem mechanischen Versagen, insbesondere der Bildung von Rissen, bei einer in einer Gasturbine üblicherweise auftretenden mechanischen Belastung zu rechnen ist. Beispiele für die Verringerung der Duktilität der Schutzschicht durch die Elemente Chrom und Aluminium sind im Stand der Technik bekannt.

Aus der WO 01/09403 A1 ist eine Superlegierung für ein Substrat bekannt, die ebenfalls Rhenium enthält. Es wird dort beschrieben, dass die von Rhenium gebildeten intermetallischen Phasen die Langzeitstabilität der Superlegierung reduziert.

Dementsprechend liegt der Erfindung die Aufgabe zugrunde, eine Legierung und eine Schutzschicht anzugeben, die eine gute Hochtemperaturbeständigkeit in Korrosion und Oxidation aufweist, eine gute Langzeitstabilität aufweist und die außerdem einer mechanischen Beanspruchung, die insbesondere in einer Gasturbine bei einer hohen Temperatur zu erwarten ist, besonders gut angepasst ist.

Die Aufgabe wird gelöst durch ein Bauteil gemäß Anspruch 1.

In den Unteransprüchen sind weitere vorteilhafte Maßnahmen aufgelistet.
Die in den Unteransprüchen aufgelisteten Maßnahmen können in vorteilhafter Art und Weise beliebig miteinander kombiniert werden.

Der Erfindung liegt u. a. die Erkenntnis zugrunde, dass die Schutzschicht in der Schicht und in dem Übergangsbereich zwischen Schutzschicht und Grundwerkstoff spröde Chrom-Rhenium-Ausscheidungen zeigt. Diese mit der Zeit und Temperatur im Einsatz sich verstärkt ausbildenden Sprödphasen führen im Betrieb zu stark ausgeprägten Längsrissen in der Schicht als auch im Interface Schicht-Grundwerkstoff mit anschließender Ablösung der Schicht. Durch die Wechselwirkung mit Kohlenstoff, der aus dem Grundwerkstoff in die Schicht hineindiffundieren kann oder der während einer Wärmebehandlung im Ofen durch die Oberfläche in die Schicht hineindiffundiert, erhöht sich zusätzlich die Sprödigkeit der Cr-Re-Ausscheidungen. Durch eine Oxidation der Chrom-Rhenium-Phasen wird die Triebkraft zur Rissbildung noch verstärkt.

Schutzschichten, die Rhenium enthalten, sind auch aus dem US-Patent 5,154,885 und der EP 0 652 299 B1 bekannt. Die aus diesen Dokumenten insgesamt entnehmbare Offenbarung zur Wirkung von Rhenium ist vorliegender Offenbarung in vollem Umfang zuzurechnen.

Wichtig ist dabei auch der Einfluss von Kobalt, der die thermischen und mechanischen Eigenschaften bestimmt.

Die Erfindung wird im Folgenden näher erläutert.

Es zeigen
- Figur 1: ein Schichtsystem mit einer Schutzschicht,
- Figur 2: Versuchsergebnisse zyklischer Belastungsversuche,
- Figur 3: eine Tabelle von Superlegierungen,
- Figur 4: eine Gasturbine,
- Figur 5: eine perspektivische Ansicht einer Brennkammer und
- Figur 6: eine perspektivische Ansicht einer Turbinenschaufel.

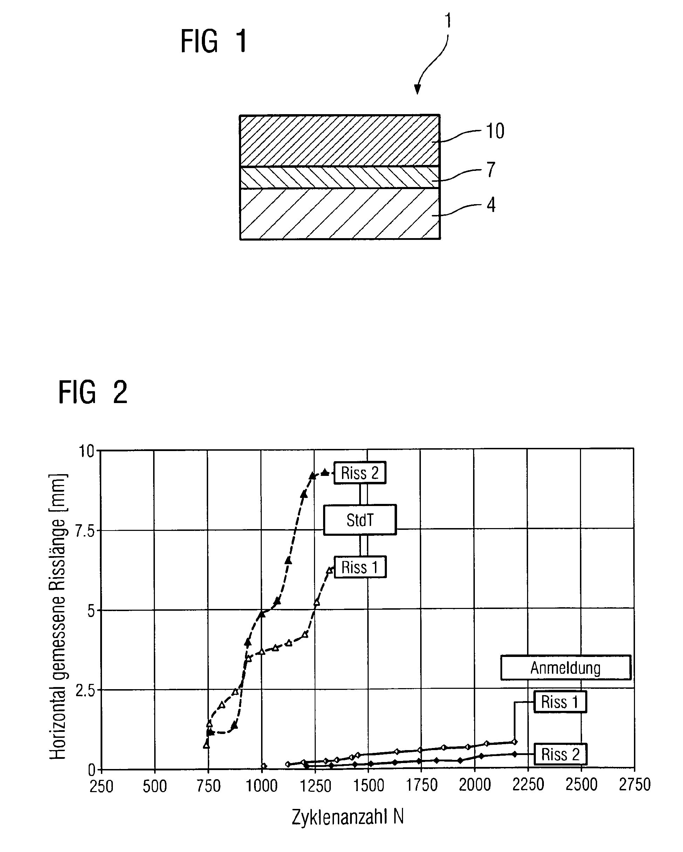

Erfindungsgemäß weist eine Schutzschicht 7 (Fig. 1) zum Schutz eines Bauteils 1, 120, 130, 138, 155 (Fig. 1, 4, 5, 6) gegen Korrosion und Oxidation bei einer hohen Temperatur folgende Elemente auf (Angabe der Anteile in wt%):
11% bis 13% Kobalt,
20% bis 22% Chrom,
10,5% bis 11,5% Aluminium,
1,5% bis 2,5% Rhenium,
0,3% bis 0,5% Yttrium und/oder zumindest ein äquivalentes Metall aus der Gruppe umfassend Scandium und die Elemente der Seltenen Erden sowie Rest Nickel.

Die Legierung kann noch weitere Elemente aufweisen. Vorzugsweise besteht die Legierung jedoch nur aus Nickel, Kobalt, Chrom, Aluminium, Yttrium und Rhenium.

Dabei wird die vorteilhafte Wirkung des Elementes Rhenium ausgenutzt unter Verhinderung der Sprödphasenbildung.

Festzustellen ist, dass die Anteile der einzelnen Elemente besonders abgestimmt sind im Hinblick auf ihre Wirkungen, die in Zusammenhang mit dem Element Rhenium zu sehen sind. Wenn die Anteile so bemessen sind, dass sich keine Chrom-Rhenium-Ausscheidungen bilden, entstehen vorteilhafterweise keine Sprödphasen während des Einsatzes der Schutzschicht, so dass das Laufzeitverhalten verbessert und verlängert ist.
Dies geschieht nicht nur durch einen geringen Chromgehalt, sondern auch, unter Berücksichtigung des Einflusses von Aluminium auf die Phasenbildung, durch genaue Bemessung des Gehalts an Aluminium.
Die niedrige Auswahl von 11% bis 13% Kobalt verbessert überraschend deutlich und überproportional die thermischen und mechanischen Eigenschaften der Schutzschicht 7.
Bei diesem eng ausgewählten Bereich an Kobalt wird die Entstehung und weitere Bildung der γ' Phase der Legierung besonders gut unterdrückt, die normalerweise zu einem Peak in dem thermischen Ausdehnungskoeffizienten der Legierung führt. Dieser Peak würde ansonsten beim Hochheizen des Bauteils mit der Schutzschicht 7 (Anfahren der Turbine) oder anderen Temperaturschwankungen hohe mechanische Spannungen (thermal mismatch) zwischen Schutzschicht 7 und einem Substrat 4 (Fig. 1) des Bauteils 1, 120, 130, 138, 155 verursachen.
Dies wird durch den erfindungsgemäß ausgewählten Kobaltgehalt zumindest drastisch reduziert.
In Wechselwirkung mit der Reduzierung der Sprödphasen, die sich besonders unter höheren mechanischen Eigenschaften negativ auswirken, werden durch die Verringerung der mechanischen Spannungen durch den ausgewählten Kobalt-Gehalt die mechanischen Eigenschaften verbessert.

Die Schutzschicht weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Gasturbine bei einer weiteren Steigerung der Eintrittstemperatur. Während des Betriebs kommt es kaum zu einer Versprödung, da die Schicht kaum Chrom-Rhenium-Ausscheidungen aufweist, die im Laufe des Einsatzes verspröden. Die Superlegierung weist keine oder maximal 6 vol% Chrom-Rhenium-Ausscheidungen auf.

Besonders günstig ist es dabei den Anteil von Rhenium auf 2%, den Chromgehalt auf 21%, den Aluminiumgehalt auf 11%, den Kobaltgehalt auf 12% und den Yttrium-Gehalt auf 0,4% festzulegen. Gewisse Schwankungen ergeben sich aufgrund großindustrieller Herstellung, so dass auch Yttriumgehalte von 0,2% bis 0,3% bzw. 0,4% bis 0,6% verwendet werden und ebenfalls gute Eigenschaften zeigen.

Eine ebenso wichtige Rolle spielen die Spurenelemente im zu verspritzenden Pulver und damit in der Schutzschicht 7, die Ausscheidungen bilden und damit Versprödungen darstellen.

Die Pulver werden beispielsweise durch Plasmaspritzen aufgebracht (APS, LPPS, VPS, ...). Andere Verfahren sind ebenso denkbar (PVD, CVD, Kaltgasspritzen, ...).
Die Summe der Spurenelemente in der Schutzschicht 7 ist in der Summe insbesondere < 0,5% und teilt sich vorteilhafterweise wie folgt auf einige Elemente auf: Kohlenstoff < 250ppm, Sauerstoff < 400ppm, Stickstoff 100ppm, Wasserstoff < 50ppm.

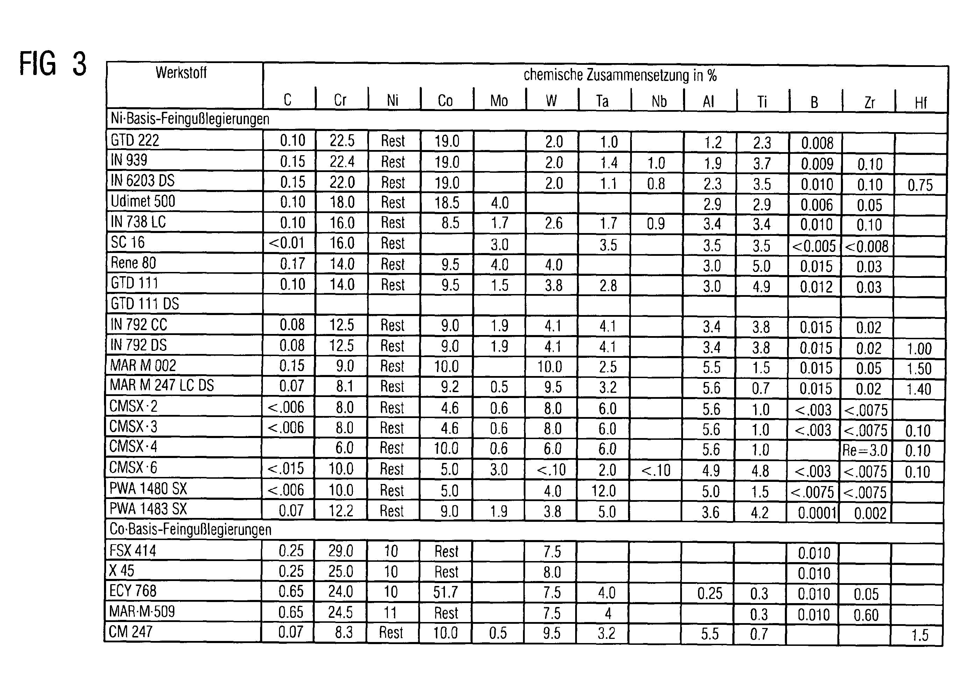

Bei diesem Bauteil 1 ist die Schutzschicht 7 vorteilhafterweise aufgetragen auf ein Substrat 4 aus einer Superlegierung auf Nickel- oder Kobaltbasis.
Als Substrat 4 kommen die Zusammensetzungen der in Figur 3 aufgelisteten Superlegierungen in Frage, insbesondere die Legierungen, die eine DS- oder SX-Struktur bilden. Vorzugsweise werden nickelbasierte Legierungen für das Substrat 4 verwendet.

Die Dicke der Schutzschicht 7 auf dem Bauteil 1 wird vorzugsweise auf einen Wert zwischen etwa 100µm und 300µm bemessen.

Die Schutzschicht 7 eignet sich besonders zum Schutz eines Bauteils gegen Korrosion und Oxidation, während das Bauteil bei einer Materialtemperatur um etwa 950° C, bei Flugturbinen auch um etwa 1100° C, mit einem Rauchgas beaufschlagt wird.

Die Schutzschicht 7 gemäß der Erfindung ist damit besonders qualifiziert zum Schutz eines Bauteils 1, 120, 130, 138, 155 einer Gasturbine 100, insbesondere einer Leitschaufel 130, Laufschaufel 120 oder anderen Komponenten, die mit heißem Gas vor oder in der Turbine der Gasturbine 100 beaufschlagt wird.
Die Schutzschicht 7 kann als overlay (Schutzschicht ist die äußere Schicht oder als Bondcoat (Schutzschicht ist eine Zwischenschicht und Haftvermittlerschicht) verwendet werden.

Auf diese Schutzschicht 7 können weitere Schichten, insbesondere keramische Wärmedämmschichten 10 (Fig. 1) aufgebracht werden.

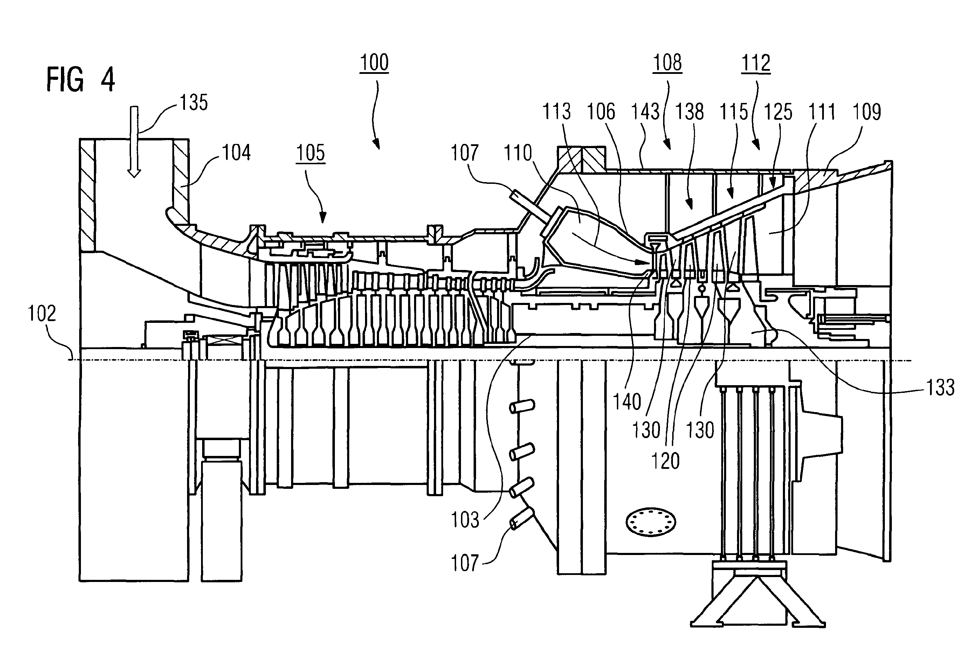

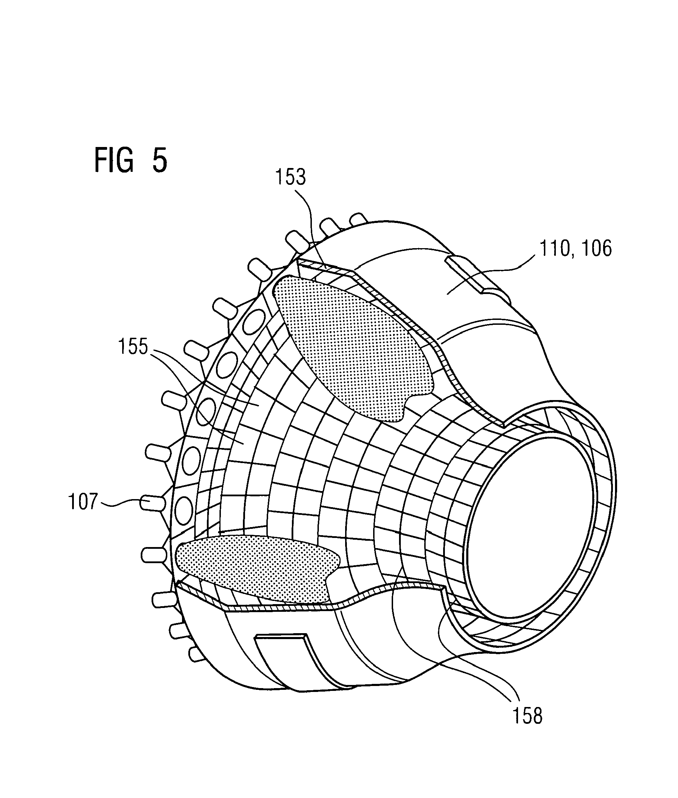

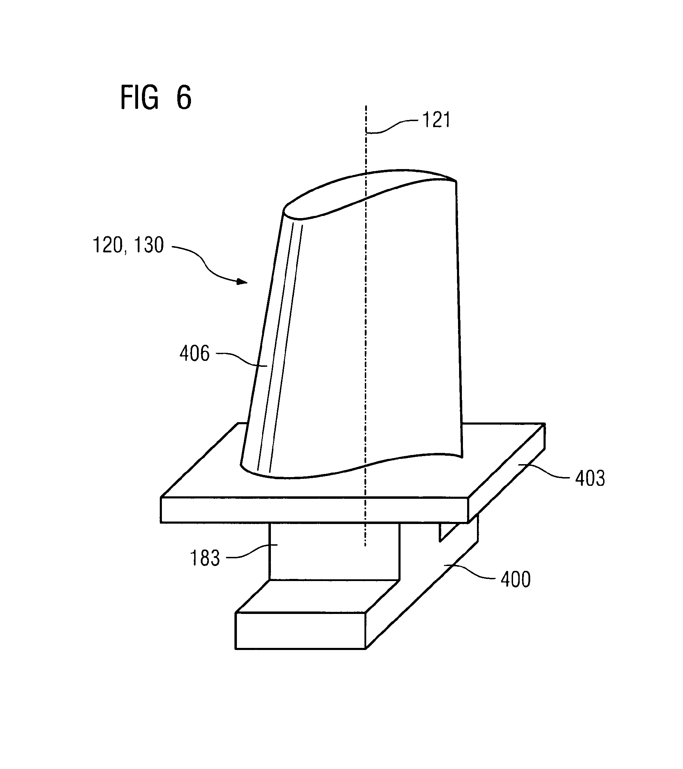

Figur 1 zeigt als ein Bauteil ein Schichtsystem 1.
Das Schichtsystem 1 besteht aus einem Substrat 4.
Das Substrat 4 kann metallisch und/oder keramisch sein. Insbesondere bei Turbinenbauteilen, wie z.B. Turbinenlauf- 120 (Fig. 6) oder -leitschaufeln 130 (Fig. 4, 6), Brennkammerauskleidungen 155 (Fig. 5) sowie anderen Gehäuseteilen 138 einer Dampf- oder Gasturbine 100 (Fig. 4), besteht das Substrat 4 aus einer nickel- oder kobaltbasierten Superlegierung.
Auf dem Substrat 4 ist die erfindungsgemäße Schutzschicht 7 vorhanden.
Vorzugsweise wird diese Schutzschicht 7 durch LPPS (low pressure plasma spraying) oder durch Kaltgasspritzen aufgebracht.

Die Schutzschicht 7 kann auf neu hergestellte Bauteile 1 und wiederaufgearbeitete Bauteile 1 aus dem Refurbishment aufgebracht werden.
Wiederaufarbeitung (Refurbishment) bedeutet, dass Bauteile 1 nach ihrem Einsatz gegebenenfalls von Schichten (Wärmedämmschicht) getrennt werden und Korrosions- und Oxidationsprodukte entfernt werden, beispielsweise durch eine Säurebehandlung (Säurestrippen). Gegebenenfalls müssen noch Risse repariert werden. Danach kann ein solches Bauteil wieder beschichtet werden, da das Substrat 4 sehr teuer ist.

Figur 2 zeigt Versuchsergebnisse von Belastungsproben, die zyklischen Belastungen unterzogen wurden, nämlich Versuchsergebnisse für eine Probe (Anmeldung) mit einer Zusammensetzung gemäß der vorliegenden Anmeldung (Anspruch 2) und Versuchsergebnisse für eine Schicht gemäß des Standes der Technik (StdT), die eine Zusammensetzung gemäß der Patente US 5,154,885, US 5,273,712 oder US 5,268,238 aufweist.

Die Schichten wurden aufgetragen auf ein Substrat mit der Bezeichnung PWA 1484 (Pratt & Whitney alloy).
Dabei werden die Proben einer bestimmten mechanischen, zyklischen Belastung (Schwingungsbelastung) und zyklischen Temperaturbelastungen ausgesetzt (TMF-Versuche).
Die Versuche wurden dehnungskontrolliert mit 0.50% Dehnung durchgeführt.

Aufgetragen ist in der Figur 2 die horizontal gemessene Risslänge gegenüber der Anzahl der Zyklen.
Es ist deutlich zu erkennen, dass die Schicht nach dem Stand der Technik schon bei 750 Zyklen Risse aufweist, die sehr viel schneller wachsen als bei einer Schicht gemäß der Anmeldung.
Bei der Schicht gemäß der Anmeldung treten erst unterhalb von 1000 Zyklen Risse auf, die außerdem noch sehr viel kleiner sind als die bei der Schicht gemäß Stand der Technik. Auch das Risswachstum über die Anzahl der Zyklen ist deutlich geringer.
Dies zeigt die Überlegenheit der erfindungsgemäßen Schutzschicht 7.

Die Figur 4 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinandergeschaltete Turbinenstufen 112 die Turbine 108.

Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 bspw. mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie sind einkristallin (SX-Struktur) oder weisen nur längsgerichtete Körner auf (DS-Struktur).

Als Material werden eisen-, nickel- oder kobaltbasierte Superlegierungen verwendet.
Beispielsweise werden Superlegierungen verwendet, wie sie aus der EP 1 204 776, EP 1 306 454, EP 1 319 729, WO 99/67435 oder WO 00/44949 bekannt sind. Diese Schriften bezüglich der Zusammensetzung der Superlegierungen und deren Vorteile sind Teil der Offenbarung.

Die Schaufeln 120, 130 weisen erfindungsgemäße Schutzschichten 7 gegen Korrosion und Korrosion und/oder eine Wärmedämmschicht auf. Die Wärmedämmschicht besteht beispielsweise ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt eine Brennkammer 110 einer Gasturbine, die ein Schichtsystem 1 aufweisen kann.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt und weist die Schutzschicht 7 gemäß Figur 1 auf.
Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln 120, 130 sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Figur 6 zeigt in perspektivischer Ansicht eine Schaufel 120, 130, die ein Schichtsystem 1 mit der erfindungsgemäßen Schutzschicht 7 aufweist.
Die Schaufel 120, 130 erstreckt sich entlang einer Längsachse 121.
Die Schaufel 120, 130 weist entlang der Längsachse 121 aufeinander folgend einen Befestigungsbereich 400, eine daran angrenzende Schaufelplattform 403 sowie einen Schaufelblattbereich 406 auf. Insbesondere im Schaufelblattbereich 406 ist die Schutzschicht 7 oder ein Schichtsystem 1 gemäß Figur 1 ausgebildet.
Im Befestigungsbereich 400 ist ein Schaufelfuß 183 gebildet, der zur Befestigung der Laufschaufeln 120, 130 an der Welle dient. Der Schaufelfuß 183 ist als Hammerkopf ausgestaltet. Andere Ausgestaltungen, beispielsweise als Tannenbaum- oder Schwalbenschwanzfuß sind möglich. Bei herkömmlichen Schaufeln 120, 130 werden in allen Bereichen 400, 403, 406 der Laufschaufel 120, 130 massive metallische Werkstoffe verwendet. Die Laufschaufel 120, 130 kann hierbei durch ein Gussverfahren, durch ein Schmiedeverfahren, durch ein Fräsverfahren oder Kombinationen daraus gefertigt sein.

## Patentansprüche

1. Bauteil, insbesondere ein Bauteil (1, 120, 130, 138, 155) einer Gasturbine (100),
bei dem ein Substrat (4) nickel- oder kobaltbasiert ist, das zum Schutz gegen Korrosion und/oder Oxidation bei hohen Temperaturen eine Schutzschicht (7) aus einer Legierung aufweist:
die folgende Elemente enthält (Angaben in wt%):
11% bis 13% Kobalt,
20% bis 22% Chrom,
10,5% bis 11,5% Aluminium,
0,3% bis 0,5% Yttrium und/oder zumindest ein äquivalentes Metall aus der Gruppe umfassend Scandium und
die Elemente der Seltenen Erden,
1,5% bis 2,5% Rhenium,
optional Anteile von Spurenelementen von Kohlenstoff, Sauerstoff, Stickstoff und Wasserstoff < 0,5wt%,
wobei der Kohlenstoffgehalt < 250ppm,
wobei der Sauerstoffgehalt < 400ppm,
wobei der Stickstoffgehalt < 100ppm und
wobei der Wasserstoffgehalt < 50ppm beträgt,
Rest Nickel.

2. Bauteil nach Anspruch 1,
wobei die Legierung enthält (in wt%)
12% Kobalt,
21% Chrom,
11% Aluminium,
0,4% Yttrium und/oder ein äquivalentes Metall aus der Gruppe umfassend Scandium und die Elemente der Seltenen Erden,
2% Rhenium.

3. Bauteil nach Anspruch 1 oder 2,
wobei die Legierung besteht aus
Nickel, Kobalt, Chrom, Aluminium, Yttrium und Rhenium.

4. Bauteil nach Anspruch 1,
bei dem auf der Schutzschicht (7) eine keramische Wärmedämmschicht (10) aufgebracht ist.
